# DEMANDE DE BREVET EUROPEEN

(11) **EP 4 685 541 A1**
(43) Date de publication de la demande: **28.01.2026**
(21) Numéro de dépôt: 25190456.1
(22) Date de dépôt: 18.07.2025
(51) Int. Cl.: G02B 17/06, G02B 23/06

(54) **TÉLESCOPE**

(30) Priorité: 18.07.2024 FR 2407872
(71) Demandeur: THALES, 92190 Meudon (FR)
(72) Inventeur: TETAZ, Nicolas, 06156 CANNES LA BOCCA CEDEX (FR)
(74) Mandataire: Lavoix

(57) **Abrégé**

La présente invention concerne un télescope (10) comprenant :
- un premier miroir (M1) concave,
- un second miroir (M2) convexe,
- un plan focal (P_{F}),
le premier miroir (M1) et le second miroir (M2) étant agencés de sorte que :
- les axes optiques du premier miroir (M1) et du second miroir (M2) sont coïncidents,
- chacun du premier miroir (M1) et du second miroir (M2) est utilisé au moins en double réflexion,
- aucune image intermédiaire n'est formée entre le premier miroir (M1) et le deuxième miroir (M2).

## Description

La présente invention concerne un télescope.

En particulier, l'invention est particulièrement adaptée pour les télescopes compacts à longue focale.

Il existe deux familles de solutions pour les télescopes compacts à longue focale : les télescopes de type Cassegrain et les télescopes de type Korsch.

Les télescopes de type Cassegrain sont formés de deux miroirs asphériques M1 et M2 et de plusieurs lentilles devant le plan focal. Cette solution est compacte, mais limitée en champ (<0.8-1°). En outre, les lentilles apportent du chromatisme, limitant la bande spectrale d'utilisation.

Les télescopes de type Korsch sont formés de deux miroirs asphériques M1 et M2 formant la cavité avant, et d'un miroir asphérique M3. Un miroir de renvoi est également utilisé. Le miroir asphérique M3 et le miroir de renvoi forment la cavité arrière. Un télescope de type Korsch atteint des champs linéaires allant jusqu'à 2 ou 3°. Néanmoins, les télescopes de type Korsch ont un volume plus important du fait de l'utilisation d'un miroir supplémentaire en cavité arrière.

Ainsi, le volume d'un télescope est généralement de forme cylindrique (pour les solutions de type Cassegrain), ou de forme cylindrique sur une base en forme de parallélépipède (pour les solutions de type Korsch). Le but est de réduire au maximum ce volume.

La réduction du volume peut se faire par trois moyens :
- Réduire le diamètre du cylindre : mais cela se fait au détriment de la quantité de lumière recueillie par l'instrument (le diamètre du cylindre étant lié au diamètre de la pupille d'entrée du télescope) et n'est donc pas un levier utilisable.
- Réduire le volume de la cavité arrière.
- Réduire le volume de la cavité avant : soit la distance entre M1 et M2.

En particulier, pour la cavité avant, d'un point de vue théorique, il est possible de réduire la longueur de la cavité avant (distance M1-M2) tout en conservant une qualité d'image nominale (c'est-à-dire théorique, avec une réalisation parfaite des miroirs et un positionnement parfait des miroirs).

Cependant, une telle combinaison de distance M1-M2 très compacte, devient également très sensible aux erreurs de positionnement (principalement l'erreur en position longitudinale du miroir M2). Une telle solution bien que de bonne qualité d'un point de vue théorique, devient totalement irréalisable avec des précisions de réalisation et de stabilité (erreur dues aux vibrations, aux dilatation thermique), au-delà des capacités actuelles de la technologie.

Il existe donc un besoin pour un télescope plus compact que les solutions actuelles, sans augmenter la sensibilité aux erreurs de positionnement des miroirs du télescope.

A cet effet, l'invention a pour objet un télescope comprenant :
- un premier miroir concave,
- un second miroir convexe,
- un plan focal,
le premier miroir et le second miroir étant agencés de sorte que :
- les axes optiques du premier miroir et du second miroir sont coïncidents,
- chacun du premier miroir et du second miroir est utilisé au moins en double réflexion de sorte que :
   - le premier miroir est propre à collecter un faisceau lumineux incident et à le réfléchir en direction du second miroir, pour obtenir un premier faisceau réfléchi,
   - le second miroir est propre à réfléchir le premier faisceau réfléchi en direction du premier miroir, pour obtenir un deuxième faisceau réfléchi ,
   - le premier miroir est propre à réfléchir le deuxième faisceau réfléchi en direction du second miroir, pour obtenir un troisième faisceau réfléchi,
   - le second miroir est propre à réfléchir le troisième faisceau réfléchi, pour obtenir un quatrième faisceau réfléchi,
   - le plan focal est propre à recevoir le quatrième faisceau réfléchi en cas de double réflexion ou un faisceau résultant de réflexions du quatrième faisceau réfléchi sur le premier miroir et le second miroir en cas de réflexion additionnelle,
- aucune image intermédiaire n'est formée entre le premier miroir et le deuxième miroir.

Suivant d'autres aspects avantageux de l'invention, le télescope comprend une ou plusieurs des caractéristiques suivantes, prises isolément ou suivant toutes les combinaisons techniquement possibles :
- le télescope présente un champ supérieur ou égal à 30° ;
- chacun du premier miroir et du second miroir est utilisé en triple réflexion de sorte que :
   - le premier miroir est propre à réfléchir le quatrième faisceau réfléchi en direction du second miroir, pour obtenir un cinquième faisceau réfléchi,
   - le second miroir est propre à réfléchir le cinquième faisceau réfléchi, pour obtenir un sixième faisceau réfléchi,
   - le plan focal est propre à recevoir le sixième faisceau réfléchi ;
- le télescope comprend un unique détecteur ou une pluralité de détecteurs, formant le plan focal ;
- l'unique détecteur présente une courbure ou la pluralité de détecteurs sont agencés de sorte à former une courbe ;
- l'unique détecteur est sphérique ou cylindrique, ou la pluralité de détecteurs sont agencés de sorte que le plan focal est sphérique ou cylindrique ;
- le télescope est dépourvu de lentilles ;
- le premier miroir présente un trou sur l'axe optique du premier miroir de sorte que le dernier faisceau réfléchi par le second miroir soit envoyé sur le plan focal à travers le trou du premier miroir ;
- le télescope comprend un miroir plan entre le premier miroir et le second miroir, le miroir plan étant agencé de sorte à envoyer, sur le plan focal, le dernier faisceau réfléchi par le second miroir ;
- le télescope comprend un miroir plan accolé au premier miroir de sorte à envoyer, sur le plan focal, le dernier faisceau réfléchi par le second miroir ;
- le miroir plan est positionné à une distance non nulle du premier miroir et à une distance non nulle du second miroir ;
- le miroir plan est un élément distinct du premier miroir et ledit miroir plan est fixé ou juxtaposé au premier miroir ;
- le premier miroir et le second miroir possèdent respectivement une surface de réflexion continue dont la dérivée seconde dans toutes les directions de l'espace est constante en tout point ; et
- le miroir plan est propre à modifier l'axe de renvoi du dernier faisceau afin que le dernier faisceau atteigne le plan focal qui est positionné sur un axe différent de l'axe optique du premier miroir et du second miroir.

L'invention apparaîtra plus clairement à la lecture de la description qui va suivre, donnée uniquement à titre d'exemple non limitatif, et faite en référence aux dessins dans lesquels :
[Fig. 1] la figure 1 est un exemple d'une représentation schématique d'un télescope selon un premier mode de réalisation,
[Fig. 2] la figure 2 est un exemple d'une représentation schématique d'un télescope selon un deuxième mode de réalisation, et
[Fig. 3] la figure 3 est un exemple d'une représentation schématique d'un télescope selon un troisième mode de réalisation.

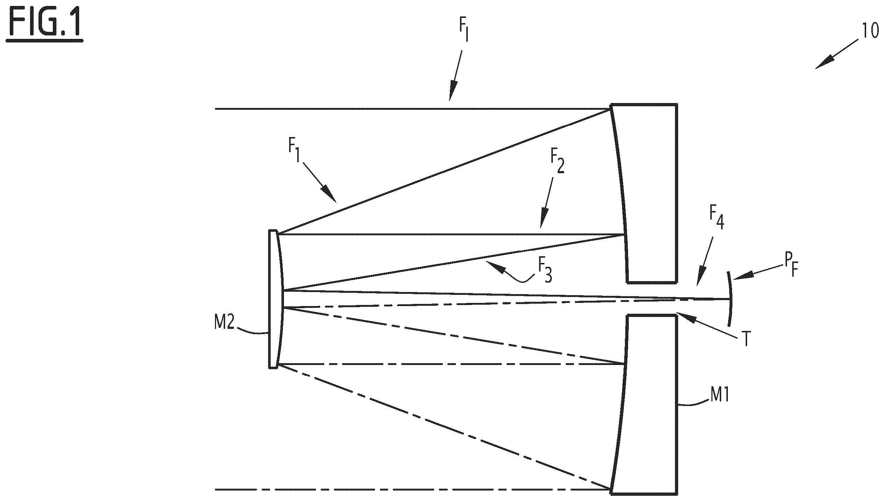

Différents modes de réalisations d'un télescope 10 sont illustrées par les figures 1à 3.

Le télescope 10 est, par exemple, un télescope à longue focale, utilisé par exemple pour l'observation depuis un satellite. Par exemple, le télescope 10 présente une focale supérieure ou égale à 3000 mm. Par exemple, le télescope 10 présente une pupille supérieure ou égale à 300 mm et un champ linéaire supérieur ou égal à 1°.

De préférence, le télescope 10 présente un grand champ, typiquement un champ supérieur ou égal à 30°.

Le champ d'un télescope, aussi appelé champ de vision ou champ de vision linéaire, est la portion de l'espace capturée par le télescope en transversal.

Comme illustré par les figures 1 à 3, le télescope 10 comprend un premier miroir M1, un second miroir M2 et un plan focal P_{F}.

De préférence, le télescope 10 est dépourvu de lentilles.

Le premier miroir M1 est concave. Le premier miroir M1 est le seul miroir concave du télescope 10.

Le second miroir M2 est convexe. Le second miroir M2 est le seul miroir convexe du télescope 10.

Le premier miroir M1 et le second miroir M2 sont agencés de sorte que :
- les axes optiques du premier miroir M1 et du second miroir M2 sont coïncidents (ou confondus).
- chacun du premier miroir M1 et du second miroir M2 est utilisé au moins en double réflexion de sorte que :
   - le premier miroir M1 est propre à collecter un faisceau lumineux incident F_{I} et à le réfléchir en direction du second miroir M2, pour obtenir un premier faisceau réfléchi F1. En particulier, le faisceau lumineux incident F_{I} est un faisceau issu d'un objet à l'infini (les rayons collectés par le premier miroir M1 sont donc parallèles entre eux).
   - le second miroir M2 est propre à réfléchir le premier faisceau réfléchi F1 en direction du premier miroir M1, pour obtenir un deuxième faisceau réfléchi F2.
   - le premier miroir M1 est propre à réfléchir le deuxième faisceau réfléchi F2 en direction du second miroir M2, pour obtenir un troisième faisceau réfléchi F3.
   - le second miroir M2 est propre à réfléchir le troisième faisceau réfléchi F3, pour obtenir un quatrième faisceau réfléchi F4.
   - le plan focal P_{F} est propre à recevoir le quatrième faisceau réfléchi F4 en cas de double réflexion ou un faisceau résultant de réflexions du quatrième faisceau réfléchi F4 sur le premier miroir M1 et le second miroir M2 en cas de réflexion additionnelle.
- aucune image intermédiaire n'est formée entre le premier miroir M1 et le second miroir M2. Les miroirs sont donc positionnés à une distance relativement proche l'un de l'autre empêchant la formation d'images intermédiaires.

Dans un exemple optionnel de réalisation, chacun du premier miroir M1 et du second miroir M2 est utilisé en triple réflexion de sorte que :
- le premier miroir M1 est propre à réfléchir le quatrième faisceau réfléchi F4 en direction du second miroir M2, pour obtenir un cinquième faisceau réfléchi F5,
- le second miroir M2 est propre à réfléchir le cinquième faisceau réfléchi F5, pour obtenir un sixième faisceau réfléchi F6.
- Dans cet exemple, le plan focal P_{F} est propre à recevoir le sixième faisceau réfléchi F6.

De préférence, le télescope 10 comprend un unique détecteur ou une pluralité de détecteurs, formant le plan focal P_{F}.

De préférence, l'unique détecteur présente une courbure ou la pluralité de détecteurs sont agencés de sorte à former une courbe.

De préférence, l'unique détecteur est sphérique ou cylindrique, ou la pluralité de détecteurs sont agencés de sorte que le plan focal P_{F} est sphérique ou cylindrique.

En particulier, dans le cas d'une double réflexion, l'utilisation d'un plan focal courbe, permet d'avoir une distance entre le second miroir M2 et le plan focal faible, en s'affranchissant des problèmes de courbure de champ. Cela permet, ainsi, de conserver une bonne qualité image.

En variante, le détecteur est plan. Cela est particulièrement adapté au cas d'une triple réflexion, ou plus, sur le premier miroir M1 et le second miroir M2.

Dans le premier mode de réalisation illustré par la figure 1, le premier miroir M1 présente un trou T sur l'axe optique du premier miroir M1 de sorte que le dernier faisceau réfléchi par le second miroir M2 soit envoyé sur le plan focal P_{F} à travers le trou T du premier miroir M1. En particulier, dans ce mode de réalisation, le plan focal P_{F} est positionné derrière (après) le premier miroir M1.

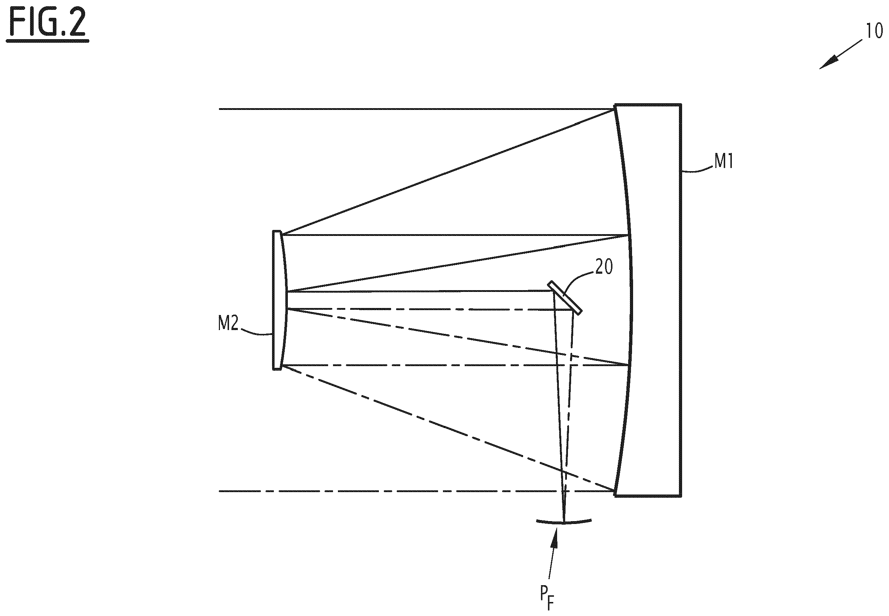

Dans le deuxième mode de réalisation illustré par la figure 2, le télescope 10 comprend un miroir plan 20 entre le premier miroir M1 et le second miroir M2, le miroir plan 20 étant agencé de sorte à envoyer, sur le plan focal P_{F}, le dernier faisceau réfléchi par le second miroir M2. En particulier, dans ce deuxième mode de réalisation, le miroir plan 20 est disjoint (non accolé) du premier miroir M1 et du deuxième miroir M2. Ce deuxième mode de réalisation permet de rejeter le plan focal P_{F} sur le côté, et d'éviter de trouer le premier miroir M1 (simplification mécanique).

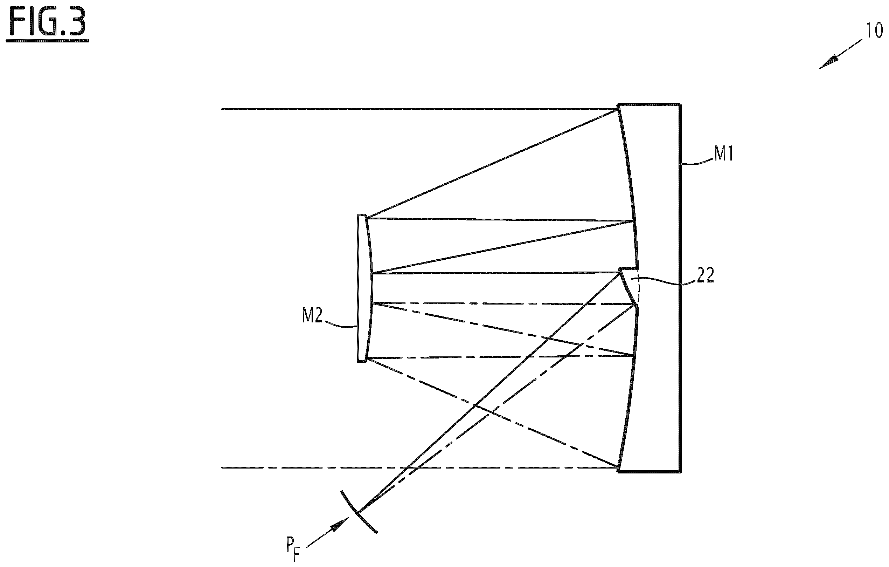

Dans le troisième mode de réalisation illustré par la figure 3, le télescope 10 comprend un miroir plan 22 accolé au premier miroir M1 de sorte à envoyer, sur le plan focal P_{F}, le dernier faisceau réfléchi par le second miroir M2. Le miroir plan 22 est, par exemple, accolé au premier miroir M1 par collage ou adhérence moléculaire. Ce troisième mode de réalisation permet de simplifier le portage du miroir plan, et encore d'éviter de trouer le premier miroir M1.

Un exemple de fonctionnement du télescope 10 va maintenant être décrit.

Lorsque le télescope 10 reçoit un faisceau lumineux incident F_{I}, un tel faisceau lumineux incident F_{I} est collecté par le premier miroir M1.

Le premier miroir M1 réfléchit le faisceau lumineux incident F_{I} en direction du second miroir M2, pour obtenir un premier faisceau réfléchi F1.

Le second miroir M2 réfléchit ensuite le premier faisceau réfléchi F1 en direction du premier miroir M1, pour obtenir un deuxième faisceau réfléchi F2.

Puis, le premier miroir M1 réfléchit le deuxième faisceau réfléchi F2 en direction du second miroir M2, pour obtenir un troisième faisceau réfléchi F3.

Le second miroir M2 réfléchit le troisième faisceau réfléchi F3, pour obtenir un quatrième faisceau réfléchi F4.

Dans le cas d'une double réflexion, le quatrième faisceau réfléchi F4 est envoyé sur le plan focal P_{F}, soit directement via le trou T du premier miroir M1 (premier mode de réalisation), soit par l'intermédiaire d'un miroir plan 20, 22 (deuxième et troisième mode de réalisation).

Dans le cas d'une triple réflexion, le premier miroir M1 réfléchit le quatrième faisceau réfléchi F4 en direction du second miroir M2, pour obtenir un cinquième faisceau réfléchi F5.

Le second miroir M2 réfléchit le cinquième faisceau, pour obtenir un sixième faisceau réfléchi F6.

Le sixième faisceau réfléchi F6 est envoyé sur le plan focal P_{F}, soit directement via le trou T du premier miroir M1 (premier mode de réalisation), soit par l'intermédiaire d'un miroir plan 20, 22 (deuxième et troisième mode de réalisation).

Ainsi, le télescope 10 utilise seulement deux miroirs courbes (miroir M1 concave et miroir M2 convexe), ce qui supprime les problèmes de chromatisme et le problème de volume en supprimant la cavité arrière.

De plus, en passant d'une solution simple réflexion sur les miroirs à une double, voir triple, réflexions sur les miroirs, on rend la cavité avant (distance M1-M2) moins sensible. Cela permet de compacter encore le télescope 10 (distance M1-M2), en conservant les mêmes performances de réalisation et de stabilité et la même qualité image finale.

Le télescope 10 est, ainsi, tout à fait adapté à remplacer les télescopes de type Korsch ou Cassegrain, par exemple pour les satellites d'observation terrestre.

L'homme du métier comprendra que les modes de réalisation et variantes précédemment décrits peuvent être adaptées pour des réflexions strictement supérieures à des triples réflexions sur le premier miroir M1 et le deuxième miroir M2.

Plus généralement, l'homme du métier comprendra que les modes de réalisation et variantes précédemment décrits peuvent être combinés pour former de nouveaux modes de réalisation pourvu qu'ils soient compatibles techniquement.

En particulier, dans des exemples de réalisation, le premier miroir M1 et le second miroir M2 possèdent respectivement une surface de réflexion continue dont la dérivée seconde dans toutes les directions de l'espace est constante en tout point.

En d'autres termes, les surfaces du premier miroir M1 et du second miroir M2 sont respectivement homogènes et sans discontinuité.

De préférence, dans les deuxième et troisièmes mode de réalisation, le miroir plan permet de changer l'axe de renvoi du dernier faisceau afin que ce dernier atteigne le plan focal qui est positionné sur un axe différent de l'axe optique.

L'homme du métier comprendra que, de manière privilégiée, dans ce cas, le miroir plan 20 ou 22 dévie le quatrième faisceau réfléchi F4 en cas de double réflexion, ou un faisceau résultant de réflexions du quatrième faisceau réfléchi F4 sur le premier miroir M1 et le second miroir M2 en cas de réflexion additionnelle, sur le plan focal P_{F}, qui est positionné sur un axe différent de l'axe optique, afin que ledit faisceau n'atteigne ni le premier miroir M1 ni le second miroir M2.

Par ailleurs, selon le deuxième mode de réalisation, le miroir plan 20 est positionné à une distance non nulle du premier miroir M1 et à une distance non nulle du second miroir M2.

Ceci permet avantageusement d'avoir un degré de liberté supplémentaire pour régler la position du plan focal P_{F}.

D'autre part, selon un exemple de réalisation du troisième mode de réalisation, le miroir plan 22 est un élément distinct du premier miroir M1. Par exemple, le miroir plan 22 est fixé ou juxtaposé au premier miroir M1. Notamment, le miroir plan 22 est collé au premier miroir M1.

Cela permet de simplifier la fabrication du télescope 10.

## Revendications

1. Télescope (10) comprenant :
- un premier miroir (M1) concave,
- un second miroir (M2) convexe,
- un plan focal (P_{F}),
le premier miroir (M1) et le second miroir (M2) étant agencés de sorte que :
- les axes optiques du premier miroir (M1) et du second miroir (M2) sont coïncidents,
- chacun du premier miroir (M1) et du second miroir (M2) est utilisé au moins en double réflexion de sorte que :
• le premier miroir (M1) est propre à collecter un faisceau lumineux incident (F_{I}) et à le réfléchir en direction du second miroir (M2), pour obtenir un premier faisceau réfléchi (F1),
• le second miroir (M2) est propre à réfléchir le premier faisceau réfléchi (F1) en direction du premier miroir (M1), pour obtenir un deuxième faisceau réfléchi (F2),
• le premier miroir (M1) est propre à réfléchir le deuxième faisceau réfléchi (F2) en direction du second miroir (M2), pour obtenir un troisième faisceau réfléchi (F3),
• le second miroir (M2) est propre à réfléchir le troisième faisceau réfléchi (F3), pour obtenir un quatrième faisceau réfléchi (F4),
• le plan focal (P_{F}) est propre à recevoir le quatrième faisceau réfléchi (F4) en cas de double réflexion ou un faisceau résultant de réflexions du quatrième faisceau réfléchi (F4) sur le premier miroir (M1) et le second miroir (M2) en cas de réflexion additionnelle,
- aucune image intermédiaire n'est formée entre le premier miroir (M1) et le deuxième miroir (M2).

2. Télescope (10) selon la revendication 1, dans lequel le télescope (10) présente un champ supérieur ou égal à 30°.

3. Télescope (10) selon la revendication 1 ou 2, dans lequel chacun du premier miroir (M1) et du second miroir (M2) est utilisé en triple réflexion de sorte que :
- le premier miroir (M1) est propre à réfléchir le quatrième faisceau réfléchi (F4) en direction du second miroir (M2), pour obtenir un cinquième faisceau réfléchi (F5),
- le second miroir (M2) est propre à réfléchir le cinquième faisceau réfléchi (F5), pour obtenir un sixième faisceau réfléchi (F6),
- le plan focal (P_{F}) est propre à recevoir le sixième faisceau réfléchi (F6).

4. Télescope (10) selon l'une quelconque des revendications 1 à 3, dans lequel le télescope (10) comprend un unique détecteur ou une pluralité de détecteurs, formant le plan focal (P_{F}).

5. Télescope (10) selon la revendication 4, dans lequel l'unique détecteur présente une courbure ou la pluralité de détecteurs sont agencés de sorte à former une courbe.

6. Télescope (10) selon la revendication 4, dans lequel l'unique détecteur est sphérique ou cylindrique, ou la pluralité de détecteurs sont agencés de sorte que le plan focal (P_{F}) est sphérique ou cylindrique.

7. Télescope (10) selon l'une quelconque des revendications 1 à 6, dans lequel le télescope (10) est dépourvu de lentilles.

8. Télescope (10) selon l'une quelconque des revendications 1 à 7, dans lequel le premier miroir (M1) présente un trou (T) sur l'axe optique du premier miroir (M1) de sorte que le dernier faisceau réfléchi par le second miroir (M2) soit envoyé sur le plan focal (P_{F}) à travers le trou (T) du premier miroir (M1).

9. Télescope (10) selon l'une quelconque des revendications 1 à 8, dans lequel le télescope (10) comprend un miroir plan (20) entre le premier miroir (M1) et le second miroir (M2), le miroir plan (20) étant agencé de sorte à envoyer, sur le plan focal (P_{F}), le dernier faisceau réfléchi par le second miroir (M2).

10. Télescope (10) selon la revendication 9, dans lequel le miroir plan (20) est positionné à une distance non nulle du premier miroir (M1) et à une distance non nulle du second miroir (M2).

11. Télescope (10) selon l'une quelconque des revendications 1 à 8, dans lequel le télescope (10) comprend un miroir plan (22) accolé au premier miroir (M1) de sorte à envoyer, sur le plan focal (P_{F}), le dernier faisceau réfléchi par le second miroir (M2).

12. Télescope (10) selon la revendication 11, dans lequel le miroir plan (22) est un élément distinct du premier miroir (M1) et dans lequel ledit miroir plan (22) est fixé ou juxtaposé au premier miroir (M1).

13. Télescope (10) selon l'une quelconque des revendications 9 à 12, dans lequel le miroir plan (20 ; 22) est propre à modifier l'axe de renvoi du dernier faisceau afin que le dernier faisceau atteigne le plan focal (P_{F}) qui est positionné sur un axe différent de l'axe optique du premier miroir et du second miroir.

14. Télescope (10) selon l'une quelconque des revendications précédentes, dans lequel le premier miroir (M1) et le second miroir (M2) possèdent respectivement une surface de réflexion continue dont la dérivée seconde dans toutes les directions de l'espace est constante en tout point.
